# EUROPEAN PATENT SPECIFICATION

(11) **EP 1 157 385 B1**
(45) Date of publication and mention of the grant of the patent: **16.10.2002**
(21) Application number: 00912091.6
(22) Date of filing: 29.02.2000
(51) Int. Cl.: G11B 33/14, G06F 1/20

(54) **COMPUTER SYSTEM WITH DUMMY DRIVE FOR OPTIMAL COOLING EFFICIENCY**
RECHNERSYSTEM MIT ATTRAPPEN-LAUFWERK FÜR OPTIMALE KÜHLUNGSLEISTUNG
SYSTEME INFORMATIQUE A UNITE FACTICE POUR REFROIDISSEMENT OPTIMAL

(30) Priority: 01.03.1999 US 260387
(43) Date of publication of application: 28.11.2001
(73) Proprietor: SUN MICROSYSTEMS, INC., Palo Alto, California 94303 (US)
(72) Inventor: GROUELL, William, L., San Ramon, CA 94583 (US)
(74) Representative: Harris, Ian Richard
(86) International application number: US0005304
(87) International publication number: WO00052695

(56) References cited:
- US-A- 4 894 749
- US-A- 5 006 959
- US-A- 5 822 184
- PATENT ABSTRACTS OF JAPAN vol. 1995, no. 06, 31 July 1995 (1995-07-31) & JP 07 066577 A (FUJITSU LTD), 10 March 1995 (1995-03-10)

## Description

### BACKGROUND OF THE INVENTION

### 1. Field of the Invention

The invention is related to the field of computer systems, and more particularly to air flow cooling of computer systems configured to contain at least one disk drive. The invention is also related to computer subsystem configurations, and the maintenance of optimal air flow and cooling of functional components in a computer system that contains unused disk drive slots.

### 2. Description of the Relevant Art

A typical computer system includes multiple electronic components, including a central processing unit or "processor", positioned within an enclosure and data storage components such as disk drives. Certain systems include external or internal data storage subsystems that are variously configured. Such subsystems may include a RAID (redundant array of inexpensive disks) or a JBOD (just a box of disks) configuration, and may include multiple electronic components including disk drive subassemblies. During operation, such electronic components dissipate electrical power (i.e., transform electrical energy into heat energy). At the same time, several key operating parameters of semiconductor electronic devices typically vary with temperature, and reliable device operation within specifications occurs only within a defined operating temperature range. For example, specified performance of a processor is typically achieved only when the temperature of the processor is maintained below a specified maximum operating temperature. Operation of the processor at a temperature above the maximum operating temperature may result in irreversible damage to the processor. In addition, it has been established that the reliabilities of semiconductor electronic devices decrease with increasing operating temperature.

The heat energy produced by electronic components during operation must thus be removed to a surrounding ambient at a rate that ensures operational and reliability requirements are met As component speeds and capabilities increase, so does the amount of electrical power dissipated by the components during operation. Cooling mechanisms employed by computer systems must thus transfer more heat energy from the computer system enclosure to the surrounding ambient.

A hard disk drive enclosure is often an external cabinet that contains multiple hard drives for data storage and is connected to a computer system. Such a cabinet may contain many disk drive slots, each configured to receive a disk drive. Often a system is sold with less than the full capacity of disk drives, thus leaving some of the slots unoccupied and available for future increased data storage capacity. The cooling system in a hard disk drive enclosure is critical and must be designed to handle the maximum heat load, *e.g.* when all the disk drive slots contain functional disk drives. When an enclosure is sold as an entry level system with a minimum number of drives installed, the unoccupied areas of the cabinet may cause an imbalance in the air flow. In a system with less than the full capacity of drives installed, the majority of the cooling air flows through the large gaps within the system reserved for future disk drive installation, rather than flowing across the installed, functional disk drives where the cooling is needed.

From US-A-5006959 there is known a data processing system comprising a disk drive slot configured to contain a disk drive; an air flow cooling system configured to provide cooling to a disk drive array contained in said disk drive; a dummy module mounted and configured to substantially duplicate the air flow resistance of a functional module.

According to the present invention there is provided a data processing system as defined in claim 1; a computer system as defined in claim 14 and a data storage cabinet as claimed in claim 19.

### SUMMARY OF THE INVENTION

The problems outlined above are in large part solved by a computer or data storage system that includes one or more dummy drives for installation in any vacant disk drive slots or positions. A dummy drive, as disclosed herein, may have a shape that substantially duplicates the three-dimensional shape of a disk drive, particularly a hard disk drive, including the hard drive assembly (HDA) and any brackets, carriers, or latching mechanisms that may be attached to a hard drive assembly. A dummy drive may be mounted or placed in an unoccupied disk drive slot in a system, and would then substantially duplicate the air flow resistance of a functional disk drive that may or may not be mounted in that slot at some future time. When all unused disk drive slots have a dummy drive installed, the interior of the system has substantially the air flow characteristics of a system with a full capacity of functional disk drives. This arrangement allows the cooling system air to cool the functional disk drives at maximal efficiency. As new functional disk drives are added to the system, a dummy drive in the selected slot may be removed and replaced with the functional disk drive. It is also understood that it is not required that all available disk drive slots have a functional disk drive or a dummy disk in order to improve the air flow and cooling efficiency of the system. Any use of one or more dummy drives as disclosed herein would fall within the spirit and scope of the present disclosure.

In certain embodiments a dummy drive as disclosed herein may be a non-functional hard drive assembly with the connectors disabled or removed. For example, such a hard drive assembly may have the connector removed, or it not include a hard disk, or it may not include any functional electronic components. The hard drive assembly would thus have the outer shape of a disk drive and would be effective in the practice of the present invention. Dummy disks may also be molded from an inexpensive material, such as a plastic, a polymer, a polyfoam plastic, a polystyrene or even expanded polystyrene material. The material may preferably be flame retardant so as to pass appropriate safety agency requirements for components inside a computer system. The dummy drives may be designed to mimic the appearance of functional drives including any bracket, carrier, latch or other attachments to the hard drive assembly. For example, a bracket or carrier may be attached to a hard drive assembly in order to configure that assembly for mounting in a particular system. A geometry substantially duplicating the shape of any of such hardware or attachments may also be incorporated into a dummy drive. A dummy drive may also include instructions molded into or attached to each dummy drive for installation, removal and/or replacement of the dummy drives as necessary. It is contemplated that the dummy drives may be discarded when they are replaced in the system with functional drives.

Dummy drives as disclosed herein may be used in any type of device or cabinet that has the capacity to contain disk drives, particularly those that contain multiple hard disk drives. Such devices would include, but are not limited to personal computers, any computer system with an electro-mechanical mass storage device or with connection to such a device, and external mass storage devices. Some such devices contain arrays of hard disk drives connected in a manner known in the field as RAID (redundant array of inexpensive disks), JBOD (just a box of disks) or by other acronyms or names that indicate a number of disks connected to a processor for mass data storage. External data storage devices or cabinets that are known in the art include deskside towers or rack mounted cabinets that are configured to contain a number of disk drives. A "hard disk," as used herein, indicates a disk in which the storage media is not routinely removable separately from the drive, as is the case with a floppy disk or a CD-ROM. The definition of a hard drive does include a "hot swap" or "hot swappable" drive in which the entire hard drive is removable by the operator for secure overnight storage, for example. As used herein a disk drive "slot" is meant to indicate a space provided for installation of a disk drive, including any rails, channels, or other configuration incorporated into a cabinet or system to accommodate a disk drive.

### BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.

FIG. I is a perspective view of an exploded external data storage system configured to contain 8 disk drives.

FIG. 2 is a perspective view of a data storage system with several empty hard drive slots.

FIG. 3 is a perspective view of a data storage system with one empty hard drive slot.

FIG. 4 is a perspective view of a data storage system with 8 hard drives installed and 4 dummy drives installed.

### DETAILED DESCRIPTION OF THE PREFERRED EMBODIMENTS

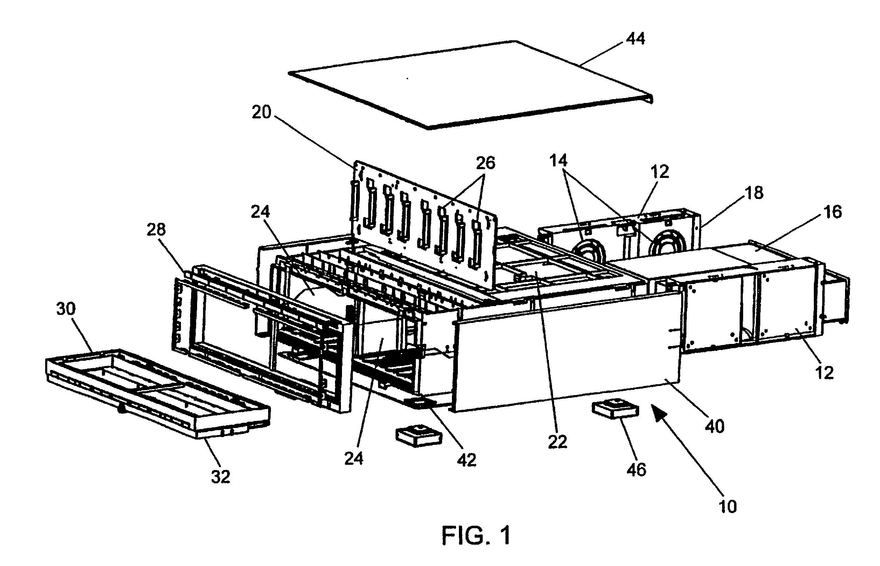

Figure 1 is an exploded view of an embodiment of an external data storage cabinet **10** that is configured to connect to a processing unit. The device includes side skins **40**, a bottom **42,** a top **44,** and feet **46.** The rear panel is not shown. The cooling system for this cabinet comprises two fan trays **12** that are disposed along the sides of the rear portion of the cabinet when assembled. The fans in this embodiment are centrifugal fans, configured such that the intakes **14** face a chamber **22** that contains two power supplies **16** (only one is shown in the drawing) and a controller board (not shown) that provides connection from the disk drives to a processing unit. The fan exhaust openings are to the rear **18** of the fan trays. A connector board **20** separates the chamber **22** from the disk drive bays **24.** The cabinet **10** shown in Figure 1 is designed to hold eight 1.6" disk drives as can be seen by the eight connectors **26** on the connector board **20.** Other embodiments of a data storage cabinet may provide slots and connectors for twelve 1" disk drives. Of course, the number and sizes of the drives is dependent on the size and design of the cabinet, and any cabinet or device configured with connections for a hard disk drive could embody the present invention if dummy drives are used. It is also understood that any size or shape of disk drive can be duplicated in light of the present disclosure in order to replace any embodiment of a functional disk drive. All such uses are included in the scope of the present disclosure.

Although the drawings attached hereto are directed to a stand alone cabinet, dummy drives as disclosed herein may be used in any type of device or cabinet that has the capacity to contain disk drives, particularly those that contain multiple hard disk drives. Such devices would include, but are not limited to personal computers, any computer system with an electro-mechanical mass storage device or with connection to such a device, and external mass storage devices as shown herein. Some such devices contain arrays of hard disk drives connected in a manner known in the field as RAID (redundant array of inexpensive disks), JBOD (just a box of disks) or by other acronyms or names that indicate a number of disks connected to a processor for mass data storage. A RAID system includes mirrored data on more than one disk to provide backup in the event that a disk becomes inoperable or otherwise unreadable. A JBOD configuration includes multiple disks connected to a processor, but each individual disk may be independently connected, and the disks are not necessarily redundant. External data storage devices or cabinets that are known in the art include deskside towers or rack mounted cabinets that are configured to contain a number of disk drives.

In the cabinet shown in Figure 1, the disk drives stand in the bays **24** in vertical orientation and connect to the connectors **26** on the connector board **20** at the rear of the disk drive bays **24.** The front of the cabinet **10** includes a bezel **28** and a door **30.** Attached to the front of the door **30** is a grill **32** which serves as the intake for the air cooling system. In the pictured embodiment, the cooling air flow is drawn in through the grill **32,** passes over and around the disk drives in the disk drive bays **24,** passes through openings in the connector board **20** and into the chamber **22.** In the chamber, the air is drawn across the controller board and the power supplies **16,** into the fan tray intake openings **14,** and is exhausted out to ambient through the rear of the fan trays **18.**

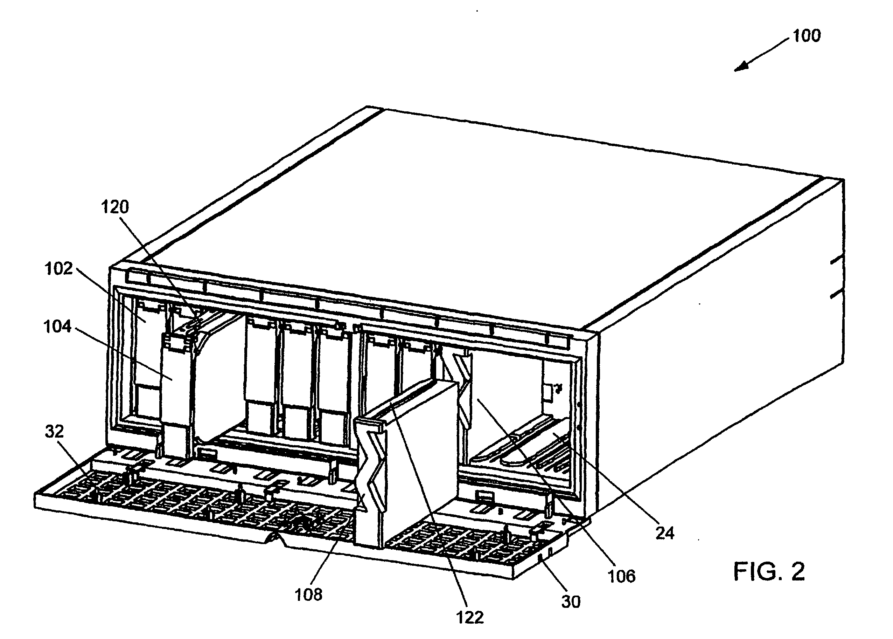

An embodiment of a cabinet **100** with 12 hard drive slots is shown in Figures 2-4. Hard disk drives **102** are installed in 8 of the slots. One hard disk drive **104** is partially removed for purposes of illustrating the invention. One dummy drive **106** is installed in the device, and a second dummy drive **108** is removed. A latching mechanism **120** is shown attached to the top of hard drive **104.** Dummy drive **108** is molded with a projection **122** along the top to duplicate the shape of the latch device **120.**

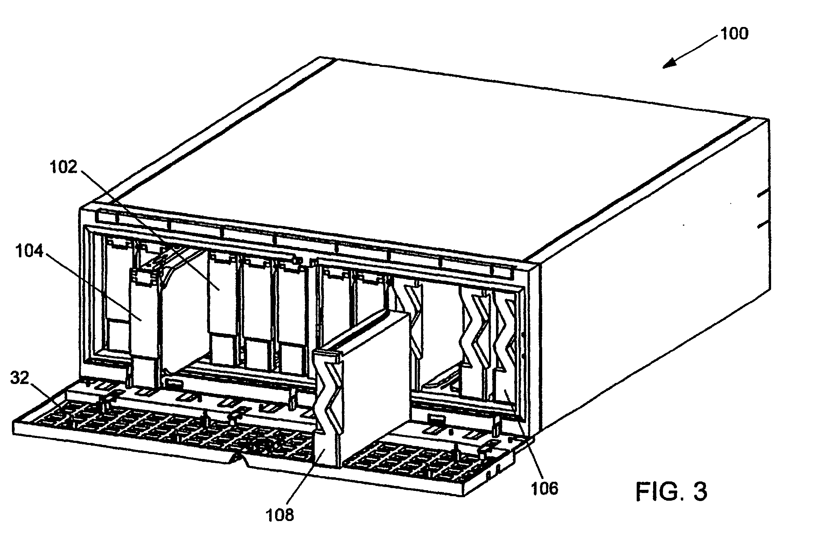

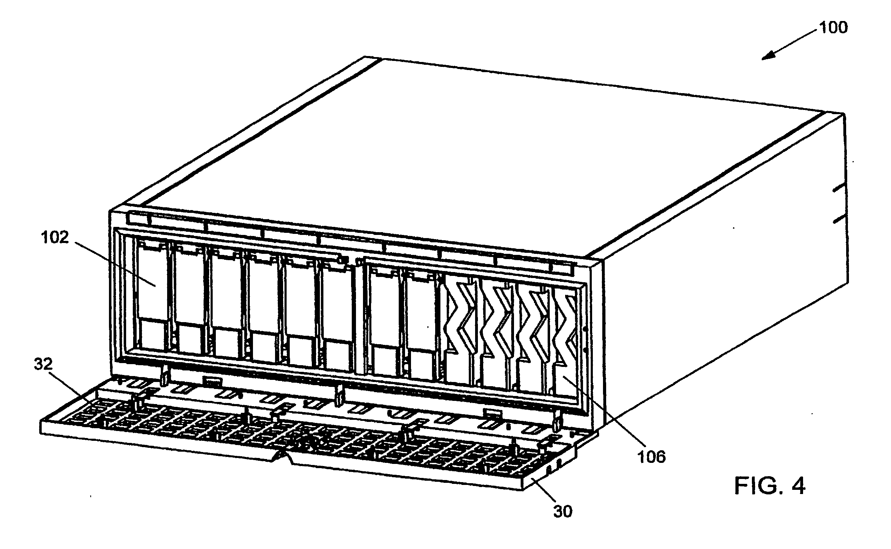

As can be seen from Figure 2, the hard drive bay **24** on the right with 3 open hard drive slots is largely empty when compared with the bay on the left, in which all the slots are filled. Air being pulled through the grill **32** in the door **30** by the fan driven cooling system will naturally follow the path of least resistance, and would therefore flow through the large opening where no hard drives or dummy drives are installed, rather than across the functional hard drives where the cooling is needed. Figure 3 is a drawing of cabinet **100** in which 3 dummy drives are installed and 1 slot is empty. The cooling of this system would be more efficient than the configuration shown in Figure 2, but would not be optimal. Figure 4 illustrates the same cabinet **100** with all slots occupied by either a functional hard drive **102** or a dummy drive **106.**

In certain embodiments a dummy drive **106** as disclosed herein may be a non-functional hard drive assembly with the connectors disabled or removed. For example, such a hard drive assembly may have the connector removed, or it not include a hard disk, or it may not include any functional electronic components. The hard drive assembly would thus have the outer shape of a disk drive and would be effective in the practice of the present invention. Dummy drives **106** may also be molded from an inexpensive material, such as a plastic, a metal, a polymer, a polyfoam plastic, a polystyrene or even expanded polystyrene material. The material may preferably be flame retardant so as to pass appropriate safety agency requirements for components inside a computer system. It is an object of the present disclosure to provide an inexpensive, throw away device that is easily replaced as hard drives are acquired. Therefore, any inexpensive material can be used to make the dummy drives disclosed herein.

The dummy drives may be designed to mimic the appearance of functional drives including any bracket, carrier, latch or other attachments to the hard drive assembly. As shown in Figure 2, a projection **122** that substantially duplicates a latching mechanism may be molded onto the dummy drive. Any other attachments normally used for hard drive installations, including a brackets or carriers may also be molded into the dummy drive. A dummy drive may also include written instructions molded into or attached to each dummy drive that explain installation, removal and/or replacement of the dummy drives as necessary.

While the devices of this invention have been described in terms of preferred embodiments, it will be apparent to those of skill in the art that variations may be applied to the described embodiments described herein without departing from the scope of the invention as claimed. All similar substitutes and modifications apparent to those skilled in the art may be applied, provided that they are within the scope of the invention as defined by the appended claims.

## Claims

1. A data processing system comprising:
a disk drive slot, configured to contain a disk drive (104);
an air flow cooling system configured to provide cooling to a disk drive contained in said disk drive slot;
a dummy disk drive (106, 108) mounted within said disk drive slot and configured to substantially duplicate the air flow resistance of a functional disk drive mounted within said disk drive slot wherein the dummy drive substantially duplicates the three dimensional geometry of a functional disk drive.

2. The data processing system of claim 1, wherein said system comprises a plurality of disk drive slots.

3. The data processing system of claim 1, wherein said disk drive slot is contained in a computer.

4. The data processing system of claim 1, wherein said disk drive slot is contained in a data storage device configured to connect to a computer.

5. The data processing system of claim 4, wherein said data storage device comprises a deskside tower cabinet.

6. The data processing system of claim 1, wherein said system comprises a plurality of disk drive connectors configured in a "redundant array of inexpensive disks" (RAID) disk array.

7. The data processing system of claim 1, wherein said system comprises a plurality of disk drive connectors configured in a "just a box of disks" (JBOD) array.

8. The data processing system of claim 1, wherein said dummy disk drive comprises a fire resistant material.

9. The data processing system of claim 1, wherein said dummy disk drive is disposable after use.

10. The data processing system of claim 2, wherein each of said plurality of disk drive slots contains a functional hard drive or a corresponding dummy disk drive.

11. The data processing system of claim 1, wherein said dummy disk drive comprises a plastic or a polymer.

12. The data processing system of claim 1, wherein said dummy disk drive comprises polystyrene.

13. The data processing system of claim 1, wherein said dummy disk drive is configured to substantially duplicate the three dimensional geometry of a functional disk drive and mounting hardware.

14. A computer system comprising:
an external data storage cabinet (100) configured to contain a plurality of disk drives (102, 104);
an air flow cooling system configured to cool said disk drives (102, 104); and
one or more dummy disk drives configured to be mounted within said cabinet;
wherein each of said one or more dummy disk drives (106, 108) when mounted in said cabinet, substantially duplicates the air flow resistance of a functional disk drive configured to be mounted in said cabinet and wherein the dummy drive substantially duplicates the three dimensional geometry of a functional disk drive.

15. The computer system of claim 14, wherein said external data storage cabinet comprises a "redundant array of inexpensive disks" (RAID) configuration.

16. The computer system of claim 14, wherein said external data storage cabinet comprises a plurality of disk drive connectors (26) comprise a "just a box of disks" (JBOD) configuration.

17. The computer system of claim 14, wherein said one or more dummy drives comprise a molded polymer.

18. The computer system of claim 14, wherein said one or more dummy disks are configured to substantially duplicate the three dimensional geometry of a functional disk drive configured to be mounted in said cabinet.

19. A data storage cabinet configured to be connected to a data processing system, said cabinet configured to contain a plurality of disk drives (102, 104) and said cabinet comprising:
an air flow cooling system configured to cool said disk drives; and
one or more dummy disks configured to be mounted within said cabinet;
wherein each of said one or more dummy disks, when mounted in said cabinet, substantially duplicates the air flow resistance of a functional disk drive mounted in said cabinet.

20. The data storage cabinet of claim 19, wherein said cabinet comprises a "redundant array of inexpensive disks" (RAID) configuration.

21. The data storage cabinet of claim 19, wherein said external data storage cabinet comprises a plurality of disk drive connectors comprise a "just a box of disks" (JBOD) configuration.

22. The data storage cabinet of claim 19, wherein said one or more dummy disks comprise a molded polymer.

23. The data storage cabinet of claim 19, wherein said one or more dummy disks are configured to substantially duplicate the three dimensional geometry of a functional disk drive configured to be mounted in said cabinet.

## Patentansprüche

1. Datenverarbeitungssystem, das aufweist:
einen Laufwerkslot, der dafür ausgelegt ist, ein Plattenlaufwerk (104) zu halten,
ein Luftkühlungssystem, das dafür ausgelegt, einem Plattenlaufwerk, das in dem Plattenlaufwerkslot aufgenommen ist, Kühlung zur Verfügung zu stellen,
ein Attrappenplattenlaufwerk (106, 108'), das innerhalb des Plattenlaufwerkslots montiert ist und derart konfiguriert ist, daß es im wesentlichen den Luftstromwiderstand eines funktionierenden Plattenlaufwerks, das innerhalb des Plattenlaufwerkslots montiert ist, dupliziert, wobei das Attrappenlaufwerk im wesentlichen der dreidimensionalen Geometrie eines funktionellen Plattenlaufwerks genau gleicht.

2. Datenverarbeitungssystem nach Anspruch 1, wobei das System eine Mehrzahl von Plattenlaufwerkslots aufweist.

3. Datenverarbeitungssystem nach Anspruch 1, wobei der Plattenlaufwerkslot in einem Computer enthalten ist.

4. Datenverarbeitungssystem nach Anspruch 1, wobei der Plattenlaufwerkslot in einer Datenspeichervorrichtung enthalten ist, die dafür ausgelegt ist, mit einem Computer verbunden zu sein.

5. Datenverarbeitungssystem nach Anspruch 4, wobei die Datenspeichervorrichtung ein Towergehäuse aufweist.

6. Datenverarbeitungssystem nach Anspruch 1, wobei das System eine Mehrzahl von Plattenlaufwerkverbindem aufweist, die in einer "redundant array of inexpensive disk" (RAID) Diskanordnung konfiguriert sind.

7. Datenverarbeitungssystem nach Anspruch 1, wobei das System eine Mehrzahl von Plattenlaufwerkverbindem aufweist, die in einer "Just a box of disk" (JBOD) Anordnung konfiguriert sind.

8. Datenverarbeitungssystem nach Anspruch 1, wobei das Attrappenplattenlaufwerk aus einem feuerresistenten Material besteht.

9. Datenverarbeitungssystem nach Anspruch 1, wobei das Attrappenplattenlaufwerk nach der Verwendung verfügbar bzw. wegwerfbar ist.

10. Datenverarbeitungssystem nach Anspruch 1, wobei jeder der Mehrzahl von Plattenlaufwerkslots ein funktionales Festplattentaufwerk oder ein entsprechendes Attrappenplattenlaufwerk enthält.

11. Datenverarbeitungssystem nach Anspruch 1, wobei das Attrappenplattenlaufwerk aus Plastik oder einem Polymer besteht.

12. Datenverarbeitungssystem nach Anspruch 1, wobei das Attrappenplattenlaufwerk aus Polystyrol besteht.

13. Datenverarbeitungssystem nach Anspruch 1, wobei das Attrappenlaufwerk konfiguriert ist, um im wesentlichen der dreidimensionalen Geometrie eines funktionierenden Plattenlaufwerks und montierter Hardware genau zu gleichen.

14. Computersystem, daß aufweist:
einen externen Datenspeicherschrank (100), der dafür ausgelegt ist, eine Mehrzahl von Plattenlaufwerken (102, 104) zu umfassen,
ein Luftkühlsystem, das dafür ausgelegt ist, die Plattenlaufwerke (102, 104) zu kühlen und
ein oder mehrere Attrappenplattenlaufwerke, die dafür ausgelegt sind, innerhalb des Schrankes montiert zu werden,
wobei jedes von dem einen oder mehreren Attrappenplattenlaufwerken (106, 108), wenn es in dem Schrank montiert ist, im wesentlichen den Lüftströmungswiderstand eines funktionierenden Plattenlaufwerks, das dafür ausgelegt ist, in dem Schrank montiert zu werden, dupliziert und wobei das Attrappenlaufwerk im wesentlichen der dreidimensionalen Geometrie eines funktionierenden Plattenlaufwerks genau gleicht.

15. Computersystem nach Anspruch 14, wobei der externe Datenspeicherschrank eine "redundant array of inexpensive disks" (RAID) Konfiguration aufweist.

16. Computersystem nach Anspruch 14, wobei der externe Datenspeicherschrank eine Mehrzahl von Plattenlaufwerkverbindern (26) aufweist, die eine "just a box of disk" (JBOD) Konfiguration aufweisen.

17. Computersystem nach Anspruch 15, wobei das eine oder die mehreren Attrappenlaufwerke aus einem geformten Polymer bestehen.

18. Computersystem nach Anspruch 14, wobei das eine oder die mehreren Attrappenlaufwerke dafür ausgelegt sind, im wesentlichen der dreidimensionalen Geometrie eines funktionierenden Plattenlaufwerks, das dafür ausgelegt ist, in dem Schrank montiert zu werden, genau zu gleichen.

19. Datenspeicherschrank, der dafür ausgelegt ist, mit einem Datenverarbeitungssystem verbunden zu werden, wobei der Schrank dafür ausgelegt ist, eine Mehrzahl von Plattenlaufwerken (102, 104) zu enthalten und der Schrank aufweist:
ein Luftflußkühlungssystem, das dafür ausgelegt ist, die Plattenlaufwerke zu kühlen, und
ein oder mehrere Attrappenplatten, die dafür ausgelegt sind, in dem Schrank montiert zu werden,
wobei jede der einen oder mehreren Attrappenplatten, wenn sie in dem Schrank montiert sind, im wesentlichen den Luftströmungswiderstand eines funktionierenden Plattenlaufwerks, das in dem Schrank montiert ist, dupliziert,

20. Datenspeicherschrank nach Anspruch 19, wobei der Schrank eine "redundant array of inexpensive disks" (RAID) Konfiguration aufweist.

21. Datenspeicherschrank nach Anspruch 19, wobei der externe Datenspeicherschrank eine Mehrzahl von Plattenlaufwerkverbindern hat, die eine "just of box of disk" (JBOD) Konfiguration haben.

22. Datenspeicherschrank nach Anspruch 19, wobei die eine oder mehreren Attrappenplatten aus einem geformten Polymer bestehen.

23. Datenspeicherschrank nach Anspruch 19, wobei die eine oder die mehreren Attrappenplatten dafür ausgelegt sind, im wesentlichen der dreidimensionalen Geometrie eines funktionierenden Plattenlaufwerks, das dafür ausgelegt ist, in dem Schrank montiert zu werden, genau gleicht.

## Revendications

1. Système de traitement de données comprenant :
un logement (fente) d'unité de disque, configuré de sorte à contenir une unité de disque (104)
un système de refroidissement à flux d'air configuré de sorte à refroidir l'unité de disque contenu à l'intérieur dudit logement d'unité de disque ;
une unité de disque fictive (106, 108) installée à l'intérieur dudit logement d'unité de disque et configuré de sorte à dupliquer substantiellement la résistance au flux d'air de l'unité de disque fonctionnelle installée à l'intérieur dudit logement de l'unité de disque dans lequel l'unité de disque fictive duplique substantiellement la forme géométrique en trois dimensions de l'unité de disque disque fonctionnel.

2. Système de traitement de données de la revendication 1, dans lequel ledit système contient une pluralité de logements d'unité de disque.

3. Système de traitement de données de la revendication 1, dans lequel ledit logement d'unité de disque est contenu à l'intérieur d'un ordinateur.

4. Système de traitement de données de la revendication 1, dans lequel ledit logement d'unité de disque est contenu dans un dispositif de stockage de données configuré de telle sorte à être relié à un ordinateur.

5. Système de traitement de données de la revendication 4, dans lequel ledit dispositif de stockage de données contient un bloc de meuble de bureau.

6. Système de traitement de données de la revendication 1, dans lequel ledit système contient une pluralité de connecteurs d'unité de disques configurés en un ensemble de disques RAID ("redundant array of inexpensive disks" - "ensemble redondant de disques peu onéreux").

7. Système de traitement de données de la revendication 1, dans lequel ledit système contient une pluralité de connecteurs de disques configurés en ensemble JBOD ("just a box of disks" - "seulement une boîte de disques")

8. Système de traitement de données de la revendication 1, dans lequel ladite unité de disque fictif contient un matériau ignifuge.

9. Système de traitement de données de la revendication 1, dans lequel ladite unité de disque fictif est jetable après son utilisation.

10. Système de traitement de données de la revendication 2, dans lequel chacun de ladite pluralité de logements de disques contient un disque dur fonctionnel ou une unité de disque fictif correspondant.

11. Système de traitement de données de la revendication 1, dans lequel ladite unité de disque fictif contient un plastique ou un polymère.

12. Système de traitement de données de la revendication 1, dans lequel ladite unité de disque fictif contient du polystyrène.

13. Système de traitement de données de la revendication 1, dans lequel ladite unité de disque fictif est configuré de sorte à dupliquer substantiellement la forme géométrique en trois dimensions d'un disque fonctionnel et de son matériel de maintien.

14. Système informatique contenant :
un meuble externe de stockage de données (100) configuré de sorte à contenir une pluralité d'unités de disques (102, 104)
un système de refroidissement à flux d'air configuré de telle sorte à refroidir lesdites unités de disques (102, 104) et
une ou plus d'unités de disques fictives configurées de sorte à être installés à l'intérieur dudit meuble ;
dans lequel chacune desdites une ou plus d'unités de disque fictives (106, 108), lorsqu'elle est installée à l'intérieur dudit meuble, duplique substantiellement la résistance au flux d'air d'une unité de disque fonctionnelle configurée de sorte à être installé dans ledit meuble et dans lequel l'unité de disque fictive duplique substantiellement la forme géométrique en trois dimensions d'une unité à disque fonctionnelle.

15. Système informatique de la revendication 14, dans lequel ledit meuble externe de stockage de données contient une configuration de disques RAID ("redundant array of inexpensive disks" - "ensemble redondant de disques peu onéreux").

16. Système informatique de la revendication 14, dans lequel ledit meuble externe de stockage de données contient une pluralité de connections (26) contenant une configuration JBOD ("just a box of disks" - "seulement une boîte de disques")

17. Système informatique de la revendication 14, dans lequel ladite une ou plus d'unités de disques fictives contient un polymère moulé.

18. Système informatique de la revendication 14, dans lequel une ou plus d'unités de disques fictives sont configurées de sorte à dupliquer substantiellement la forme géométrique en trois dimensions d'une unité de disque fonctionnelle configurée pour être installée dans ledit meuble.

19. Meuble de stockage de données configuré de sorte à être relié à un système de traitement de données, ledit meuble étant configuré de sorte à contenir une pluralité d'unités de disques (102, 104) et ledit meuble contenant :
un système de refroidissement à flux d'air configuré de telle sorte à refroidir lesdites unités de disques ; et
un ou plus disques fictifs configurés pour être installés à l'intérieur dudit meuble ;
dans lequel chacune desdites une ou plus unités de disques fictives, lorsqu'elles sont installées à l'intérieur dudit meuble, dupliquent substantiellement la résistance au flux d'air d'une unité de disque fonctionnelle monté dans ledit meuble.

20. Meuble de stockage de données de la revendication 19, dans lequel ledit meuble contient une configuration de disques RAID ("redundant array of inexpensive disks" - "ensemble redondant de disques peu onéreux").

21. Meuble de stockage de données de la revendication 19, dans lequel ledit meuble externe de stockage de données contient une pluralité de connecteurs contenant une configuration JBOD ("just a box of disks" - "seulement une boîte de disques").

22. Meuble de stockage de données de la revendication 19, dans laquelle ladite une ou plus des unités de disques fictives comprend un polymère moulé.

23. Meuble de stockage de données de la revendication 19, dans laquelle une ou plusieurs unités de disques fictives sont configurées de telle sorte à dupliquer substantiellement la forme géométrie en trois dimensions d'une unité de disque fonctionnelle configurée pour être installé dans ledit meuble.
